# EUROPÄISCHE PATENTSCHRIFT

(11) **EP 3 323 013 B1**
(45) Veröffentlichungstag und Bekanntmachung des Hinweises auf die Patenterteilung: **27.08.2025**
(21) Anmeldenummer: 16744675.6
(22) Anmeldetag: 07.07.2016
(51) Int. Cl.: G02B 27/01, B60R 11/00, B60R 11/02, B60K 35/50, B60K 35/231, B60K 35/22, B60K 35/53, B60K 35/60, B60K 37/20

(54) **KOPF-OBEN-ANZEIGEEINHEIT MIT ZUMINDEST EINEM BEFESTIGUNGSELEMENT, ANORDNUNG UND KRAFTFAHRZEUG**
HEAD-UP DISPLAY UNIT HAVING AT LEAST ONE FASTENING ELEMENT, ARRANGEMENT AND MOTOR VEHICLE
UNITÉ D'AFFICHAGE TÊTE HAUTE COMPORTANT AU MOINS UN ÉLÉMENT DE FIXATION, DISPOSITIF ET VÉHICULE À MOTEUR

(30) Priorität: 13.07.2015 DE 102015111269
(43) Veröffentlichungstag der Anmeldung: 23.05.2018
(73) Patentinhaber: Valeo Comfort and Driving Assistance, 94000 Créteil (FR)
(72) Erfinder: SIMONIS, Karl, 74321 Bietigheim-Bissingen (DE); SCHOCH, Lars, 74321 Bietigheim-Bissingen (DE); KUNTZE, Daniel, 74321 Bietigheim-Bissingen (DE); KRUPKA, Ales, 10800 Prague (CZ)
(86) Internationale Anmeldenummer: PCT/EP2016/066144
(87) Internationale Veröffentlichungsnummer: WO 2017/009177

(56) Entgegenhaltungen:
- EP-B1- 1 816 029
- WO-A1-2011/061348
- WO-A1-2011/061348
- WO-A1-2015/029192
- WO-A1-2015/029192
- DE-A1- 102005 031 357
- DE-A1- 102005 031 357
- Retrieved from the Internet <URL:https://www.bmwpartsdeal.com/parts/bmw-head_up_display-62309262179.html> [retrieved on 20211006]
- Retrieved from the Internet <URL:https://images.cdnrrr.com//bos/0/0/0/0/2/9/4/5/2/43fa63bbbba59d129a879dc02ac47415-bmw-x5-e70-head-up-ekranas-displejus.jpg> [retrieved on 20211006]

## Beschreibung

Die Erfindung betrifft eine Kopf-oben-Anzeigeeinheit mit zumindest einem Befestigungselement zum Befestigen der Kopf-oben-Anzeigeeinheit an zumindest einem Kraftfahrzeugteil eines Kraftfahrzeugs, wobei die Kopf-oben-Anzeigeeinheit ein Gehäuse und einen Bildgeber umfasst, und das zumindest eine Befestigungselement mit dem Gehäuse verbunden ist. Die Erfindung betrifft auch eine Anordnung mit einer Kopf-oben-Anzeigeeinheit sowie ein Kraftfahrzeug mit einer Anordnung.

Kopf-oben-Anzeigeeinheiten für Kraftfahrzeuge sind aus dem Stand der Technik bekannt.

Die Kopf-oben-Anzeigeeinheit (HUD - head-up display) ist ein Anzeigesystem, bei dem der Nutzer seine Kopfhaltung beziehungsweise Blickrichtung beibehalten kann, weil die Informationen in sein Sichtfeld projiziert werden.

So sind Kopf-Oben-Anzeigeeinheiten gemäß dem Oberbegriff der unabhängigen Ansprüche im Internet offenbart wie beispielsweise:
- Foto eines BMW 62309262179 Head-Up Displays, gefunden im Internet: URL: https://images.cdnrrr.com//bos/ 0/0/0/0/2/9/4/5/2/43fa63bbbba59d129a879dc02ac47415-bmw-x5-e 70- head-up-ekranas-displejus.jpg, [gefunden am 2021-10-06], oder
- BMW 62309262179 Head-Up Display, gefunden im Internet: URL: https://www.bmwpartsdeal.com/parts/bmw- head_up_display-62309262179.html, [gefunden am 2021-10-06].

Die EP 1 972 483 B1 offenbart eine Kopf-oben-Anzeigeeinheit, welche mit mindestens einem ihrer Bauteile an einer Tragstruktur eines Fahrzeugs wärmeleitend angekoppelt ist.

Üblicherweise werden Kopf-oben-Anzeigeeinheiten mit Klammern oder Klipsen an einem Kraftfahrzeugteil des Kraftfahrzeugs befestigt. Nachteilig daran ist, dass sich hierdurch Vibrationen von dem Kraftfahrzeugteil auf die Kopf-oben-Anzeigeeinheit übertragen können.

Es ist Aufgabe der Erfindung, eine Anordnung sowie eir Kraftfahrzeug bereitzustellen, bei welchem beziehungsweise bei welcher die Kopf-oben-Anzeigeeinheit vibrationsärmer an dem Kraftfahrzeugteil befestigt werden kann.

Diese Aufgabe wird erfindungsgemäß durch eine Anordnung sowie durch ein Kraftfahrzeug mit den Merkmalen gemäß den jeweiligen unabhängigen Ansprüchen gelöst.

Eine erfindungsgemäße Anordnung mit einer Kopf-oben-Anzeigeeinheit weist zumindest eir Befestigungselement zum Befestigen der Kopf-oben-Anzeigeeinheit an zumindest einem Kraftfahrzeugteil eines Kraftfahrzeugs auf. Die Kopf-oben-Anzeigeeinheit umfasst ein Gehäuse und einen Bildgeber. Das zumindest eine Befestigungselement ist mit dem Gehäuse verbunden. Als ein wesentlicher Gedanke der Erfindung ist vorgesehen, dass das zumindest eine Befestigungselement zur schwingungsentkoppelten Befestigung der Kopf-oben-Anzeigeeinheit an einem ersten Kraftfahrzeug ausgebildet ist.

Durch das Befestigungselement kann die Kopf-oben-Anzeigeeinheit schwingungsentkoppelt und/oder geräuschentkoppelt an dem ersten Kraftfahrzeugteil befestigt werden. Durch elastische Aufnahmeelemente wird verhindert, dass sich Vibrationen beziehungsweise Schwingungen von dem ersten Kraftfahrzeugteil auf die Kopf-oben-Anzeigeeinheit übertragen. Das Befestigungselement ist vorzugsweise nippelförmig ausgebildet und kann dazu in einem korrespondierenden Teil des Aufnahmeelements des ersten Kraftfahrzeugteils aufgrund seiner Elastizität formschlüssig aufgenommen werden. Durch die Zapfenform beziehungsweise Nippelform kann das Befestigungselement also bei der Montage nach der Überwindung eines Anfangswiderstands in das Aufnahmeelement eingedrückt werden und dort die schwingungsentkoppelte Befestigung bereitstellen. Das Befestigungselement kann alternativ auch als Schraube, Stift oder Clip ausgeführt sein.

Erfindungsgemäß ist es vorgesehen, dass das Befestigungselement starr, insbesondere aus Kunststoff oder Stahl, ausgebildet ist und zum Eingriff in ein elastisches und anzeigeeinheitexternes Aufnahmeelement zur Ausbildung der schwingungsentkoppelten Befestigung ausgebildet ist. So wird die schwingungsentkoppelte Befestigung insbesondere durch ein Zusammenspiel des Befestigungselements mit dem Aufnahmeelement bereitgestellt. Das Aufnahmeelement kann dabei beispielsweise durch ein Elastomer bereitgestellt werden. Dadurch, dass das Befestigungselement starr ausgebildet ist, kann das Befestigungselement einfach in das Aufnahmeelement bei der Montage eingepresst werden. Das Aufnahmeelement kann auch als zumindest zum Teil flächiges und elastisches Auflageelement ausgeführt sein, das sich im montierten Zustand zwischen Kopf-oben-Anzeigeeinheit und Kraftfahrzeugteil befindet. Ebenso kann das Aufnahmeelement als umlaufende elastische Dichtung ausgeführt sein, die sich im montierten Zustand zwischen Kopf-open-Anzeigeeinheit und Kraftfahrzeugteil befindet.

Weiterhin ist es vorzugsweise vorgesehen, dass das Befestigungselement zur Befestigung des Gehäuses der Kopf-oben-Anzeigeeinheit an dem als Armaturenbrett ausgebildeten ersten Kraftfahrzeugteil ausgebildet ist. So ist das Befestigungselement also dazu ausgebildet, die Kopf-oben-Anzeigeeinheit an dem Armaturenbrett zu befestigen. Vorteilhaft ist dies, weil besonders von dem Armaturenbrett Vibrationen des Kraftfahrzeugs aufgenommen werden und an befestigte Bauteile abgegeben werden. Durch das Befestigungselement kann die Kopf-oben-Anzeigeeinheit schwingungsentkoppelt an dem schwingenden Armaturenbrett befestigt werden.

Insbesondere ist es vorgesehen, dass an dem Gehäuse zumindest ein Zentrierelement zur Ausrichtung des Gehäuses an dem ersten Kraftfahrzeugteil angeordnet ist. Insbesondere umfasst das zumindest eine Zentrierelement ein erstes Zentrierelement und ein zweites Zentrierelement. So kann die Kopf-oben-Anzeigeeinheit bei der Montage zuerst mit dem ersten Zentrierelement derart festgelegt werden, sodass schließlich nur noch eine Rotationsbewegung um das erste Zentrierelement möglich ist. Wenn dann bei richtiger Ausrichtung der Kopf-oben-Anzeigeeinheit auch das zweite Zentrierelement in eine Zentrieröffnung des ersten Kraftfahrzeugteils einrastet, so ist die Kopf-oben-Anzeigeeinheit bezüglich des ersten Kraftfahrzeugteils derart ausgerichtet, dass das Befestigungselement in das Aufnahmeelement eingedrückt werden kann. Durch das zumindest eine Zentrierelement wird die Montage der Kopf-oben-Anzeigeeinheit an dem ersten Kraftfahrzeugteil also vereinfacht.

Weiterhin ist insbesondere vorgesehen, dass das zumindest eine Zentrierelement eine Montagehilfe ist und vorauseilend gegenüber dem Befestigungselement ausgebildet ist. Das bedeutet insbesondere, dass das zumindest eine Zentrierelement für die Montage der Kopf-oben-Anzeigeeinheit genutzt wird und im späteren montierten Zustand nicht mehr mit dem ersten Kraftfahrzeugteil verbunden sein muss. Weiterhin ist das zumindest eine Zentrierelement vorauseilend gegenüber dem Befestigungselement ausgebildet, was also bedeutet, dass das zumindest eine Zentrierelement länger und somit von dem Gehäuse weiter abstehend als das Befestigungselement ausgebildet ist. So berührt das zumindest eine Zentrierelement bei einem Einsetzen der Kopf-oben-Anzeigeeinheit in das erste Kraftfahrzeugteil zuerst das erste Kraftfahrzeugteil, bevor das Befestigungselement das erste Kraftfahrzeugteil berührt. Durch das Zentrierelement kann die Montage der Kopf-oben-Anzeigeeinheit schnell und sicher durchgeführt werden.

Weiterhin ist es vorzugsweise vorgesehen, dass die Kopf-oben-Anzeigeeinheit mit einem weiteren Befestigungselement zur Befestigung an einem zweiten Kraftfahrzeugteil des Kraftfahrzeugs ausgebildet ist, wobei das weitere Befestigungselement zur Lageeinstellung der Kopf-oben-Anzeigeeinheit in zwei Raumrichtungen zum zweiten Kraftfahrzeugteil ausgebildet ist. Das weitere Befestigungselement kann beispielsweise dazu ausgebildet sein, im Wesentlichen das Gewicht der Kopf-oben-Anzeigeeinheit aufzunehmen. Weiterhin kann das weitere Befestigungselement eine spielausgleichende Funktion bereitstellen, mit der die Kopf-oben-Anzeigeeinheit in die zwei Raumrichtungen zum zweiten Kraftfahrzeugteil hin ausgerichtet werden kann. So kann bei der Montage der Kopf-oben-Anzeigeeinheit die Lage bezüglich der zwei Raumrichtungen zum zweiten Kraftfahrzeugteil angepasst werden. Das zweite Kraftfahrzeugteil kann dabei beispielsweise als ein Querträger des Kraftfahrzeugs ausgebildet sein.

Die Erfindung betrifft eine Anordnung mit zumindest einem ersten Kraftfahrzeugteil eines Kraftfahrzeugs und einer erfindungsgemäßen Kopf-oben-Anzeigeeinheit.

Insbesondere ist es vorgesehen, dass das erste Kraftfahrzeugteil als ein Armaturenbrett des Kraftfahrzeugs ausgebildet ist. Von dem Armaturenbrett können Schwingungen beziehungsweise Vibrationen des Kraftfahrzeugs an die Kopf-oben-Anzeigeeinheit übertragen werden, falls diese nicht schwingungsentkoppelt befestigt ist. Vorteilhaft ist die Anordnung der Kopf-oben-Anzeigeeinheit an dem Armaturenbrett, weil dadurch eine Eyebox beziehungsweise eine Anzeigezone der Kopf-oben-Anzeigeeinheit präzise auf Augen eines Nutzers der Kopf-oben-Anzeigeeinheit ausgerichtet werden kann.

Weiterhin ist es gemäß der beanspruchten Erfindung vorgesehen, dass das erste Kraftfahrzeugteil mit zumindest einem Aufnahmeelement zur Aufnahme eines Befestigungselements der Kopf-oben-Anzeigeeinheit ausgebildet ist. Das Aufnahmeelement ist dabei das Gegenstück des Befestigungselements zur schwingungsentkoppelten Befestigung. So kann das Befestigungselement in das Aufnahmeelement bei der Montage eingedrückt werden, um die schwingungsentkoppelte Befestigung bereitzustellen. Das erste Kraftfahrzeugteil weist also insbesondere mehrere Aufnahmeelemente zur Aufnahme von insbesondere jeweils einem Befestigungselement der Kopf-oben-Anzeigeeinheit auf. So kann die Kopf-oben-Anzeigeeinheit an mehreren Stellen schwingungsentkoppelt an dem ersten Kraftfahrzeugteil befestigt werden.

Weiterhin ist es gemäß der beanspruchten Erfindung vorgesehen, dass das zumindest eine Aufnahmeelement zumindest teilweise elastisch ist, insbesondere aus einem Elastomer ausgebildet ist. Durch die zumindest teilweise elastische Ausbildung des Aufnahmeelements kann die schwingungsentkoppelte Befestigung der Kopf-oben-Anzeigeeinheit effektiver erfolgen. Dadurch kann das Befestigungselement selbst beispielsweise starr ausgebildet sein, weil die Schwingung von dem ersten Kraftfahrzeugteil durch das Aufnahmeelement aufgenommen wird und aufgrund der teilweise elastischen Ausbildung nicht an das Befestigungselement und somit die Kopf-oben-Anzeigeeinheit übertragen wird. Die teilweise elastische Ausbildung des Aufnahmeelements wird insbesondere durch das Elastomer bereitgestellt. Vorteilhaft an dem Elastomer ist die dadurch zuverlässig bereitgestellte elastische Eigenschaft des Aufnahmeelements.

Vorzugsweise ist es vorgesehen, dass das zumindest eine Aufnahmeelement in einer an einer Oberseite des ersten Kraftfahrzeugteils ausgebildeten und bezüglich einer Hauptfläche des ersten Kraftfahrzeugteils vertieften Auflagefläche angeordnet ist, welche eine Öffnung im ersten Kraftfahrzeugteil zum Hindurchstecken der Kopf-oben-Anzeigeeinheit umgibt. Die Oberseite des ersten Kraftfahrzeugteils ist dadurch insbesondere als Oberseite des Armaturenbretts des Kraftfahrzeugs beschrieben. Die Oberseite des Armaturenbretts ist bei montiertem Armaturenbrett in Richtung des Innenraums des Kraftfahrzeugs ausgerichtet. Bei der Montage wird die Kopf-oben-Anzeigeeinheit in die Öffnung hindurchgesteckt und schließlich in der vertieften Auflagefläche angeordnet. Vorzugsweise sind die Aufnahmeelemente in der vertieften Auflagefläche angeordnet, um bei montierter Kopf-oben-Anzeigeeinheit einen bündigen und/oder ebenen Übergang von dem Armaturenbrett zu dem Gehäuse der Kopf-oben-Anzeigeeinheit zu ermöglichen. Vorzugsweise stehen die Aufnahmeelement über und sind somit nicht bündig mit der vertieften Auflagefläche. Dadurch kann die schwingungsentkoppelte Befestigung der Kopf-oben-Anzeigeeinheit zusätzlich zuverlässiger gestaltet werden. So liegt die Kopf-oben-Anzeigeeinheit also nicht direkt, sondern nur über die Aufnahmeelemente auf dem ersten Kraftfahrzeugteil auf. Durch die vertiefte Auflagefläche wird also insbesondere ein negatives Podest geschaffen. Die vertiefte Auflagefläche umgibt beziehungsweise umrandet die Öffnung, in welche die Kopf-oben-Anzeigeeinheit bei der Montage hindurchgesteckt wird.

Weiterhin ist es vorzugsweise vorgesehen, dass das erste Kraftfahrzeugteil mit zumindest einer mit einem Zentrierelement der Kopf-oben-Anzeigeeinheit korrespondierenden Zentrieröffnung zur Ausrichtung der Kopf-oben-Anzeigeeinheit bezüglich des ersten Kraftfahrzeugteils beim Koppeln des Zentrierelements mit der Zentrieröffnung ausgebildet ist. Durch die zumindest eine Zentrieröffnung wird insbesondere eine erste Zentrieröffnung für die Aufnahme eines ersten Zentrierelements und eine zweite Zentrieröffnung für die Aufnahme eines zweiten Zentrierelements beschrieben. Dabei kann die erste Zentrieröffnung beispielsweise als ein Rundloch ausgebildet sein, während die zweite Zentrieröffnung als ein Langloch ausgebildet ist. Durch das Langloch der zweiten Zentrieröffnung können beispielsweise Fertigungsungenauigkeiten von dem ersten Kraftfahrzeugteil und/oder der Kopf-oben-Anzeigeeinheit ausgeglichen werden. So ist es beispielsweise vorgesehen, dass das erste Zentrierelement in die erste Zentrieröffnung eingesteckt wird und dadurch bis auf die Rotationsbewegung um das erste Zentrierelement herum bezüglich seiner Freiheitsgrade festgelegt ist. Anschließend wird die Rotationsbewegung so weit ausgeführt, bis das zweite Zentrierelement in die zweite Zentrieröffnung einrastet. Sind die Zentrierelemente in die jeweiligen Zentrieröffnungen eingerastet, so kann dann das Befestigungselement in das Aufnahmeelement eingedrückt werden, um die schwingungsentkoppelte Befestigung bereitzustellen.

Vorzugsweise ist es vorgesehen, dass die Kopf-oben-Anzeigeeinheit mittels eines weiteren Befestigungselements der Kopf-oben-Anzeigeeinheit an einem, insbesondere als Querträger ausgebildeten, zweiten Kraftfahrzeugteil des Kraftfahrzeugs befestigt ist. Durch die Befestigung der Kopf-oben-Anzeigeeinheit mittels des weiteren Befestigungselements an dem zweiten Kraftfahrzeugteil kann insbesondere ein wesentlicher Anteil des Gewichts der Kopf-oben-Anzeigeeinheit von dem zweiten Kraftfahrzeugteil aufgenommen beziehungsweise getragen werden. Der Querträger stellt somit eine stabile Möglichkeit dar, um die Kopf-oben-Anzeigeeinheit stabil zu befestigen. Durch das weitere Befestigungselement wird insbesondere eine spielausgleichende Montage der Kopf-oben-Anzeigeeinheit an dem zweiten Kraftfahrzeugteil ermöglicht. So können durch das weitere Befestigungselement Toleranzen zwischen dem weiteren Befestigungselement und dem zweiten Kraftfahrzeugteil ausgeglichen werden. Die Toleranzen können beispielsweise durch positionelles Festlegen der Kopf-oben-Anzeigeeinheit mittels des Befestigungselements und des ersten Kraftfahrzeugteils vorliegen.

Weiterhin ist es vorzugsweise vorgesehen, dass das zweite Kraftfahrzeugteil mit einem, insbesondere L-förmigen, weiteren Aufnahmeelement zur Aufnahme des weiteren Befestigungselements ausgebildet ist, und das weitere Aufnahmeelement ein, insbesondere randseitig offenes, Langloch zur vertikalen Lageeinstellung der Kopf-oben-Anzeigeeinheit bezüglich des zweiten Kraftfahrzeugteils aufweist. Durch das weitere Aufnahmeelement kann das weitere Befestigungselement zuverlässiger und einfacher mit dem zweiten Kraftfahrzeugteil verbunden werden. Durch die insbesondere L-förmige Ausbildung des weiteren Aufnahmeelements kann das weitere Befestigungselement bei der Montage einfach auf das weitere Aufnahmeelement aufgesteckt beziehungsweise in dieses hineingesteckt werden. Durch die L-förmige Ausgestaltung des weiteren Aufnahmeelements ist das insbesondere randseitig offene Langloch mit der offenen Seite in Richtung der Kopf-oben-Anzeigeeinheit ausgebildet. Somit kann die Montagerichtung der Kopf-oben-Anzeigeeinheit wegen der durch die L-förmige Ausgestaltung bereitgestellten Ausrichtung des weiteren Aufnahmeelements einfacher und zuverlässiger erfolgen. Durch das Langloch kann die vertikale Lage der Kopf-oben-Anzeigeeinheit, also wie tief sich die Kopf-oben-Anzeigeeinheit in das zweite Kraftfahrzeugteil erstreckt, angepasst werden. Eine horizontale Lageeinstellung der Kopf-oben-Anzeigeeinheit bezüglich des Querträgers kann durch das weitere Befestigungselement selbst bereitgestellt werden.

Ein erfindungsgemäßes Kraftfahrzeug umfasst eine erfindungsgemäße Anordnung. Das Kraftfahrzeug kann beispielsweise auch mehrere der erfindungsgemäßen Anordnungen umfassen.

Mit Angaben "oben", "unten", "vorne", "hinten", "horizontal", "vertikal" etc. sind die bei bestimmungsgemäßem Gebrauch und bestimmungsgemäßem Anordnen der Kopf-oben-Anzeigeeinheit und bei einem dann vor der Kopf-oben-Anzeigeeinheit stehenden und in Richtung der Kopf-oben-Anzeigeeinheit blickenden Beobachter gegebenen Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Die Ausführungsbeispiele der Erfindung werden nachfolgend anhand schematischer Zeichnungen näher erläutert.

Dabei zeigen:
- Fig. 1: eine schematische Darstellung eines erfindungsgemäßen Kraftfahrzeugs mit einer Anordnung;
- Fig. 2: eine schematische Darstellung einer Kopf-oben-Anzeigeeinheit der erfindungsgemäßen Anordnung;
- Fig. 3: eine schematische Darstellung der Anordnung in unmontiertem Zustand mit der Kopf-oben-Anzeigeeinheit, einem ersten Kraftfahrzeugteil des Kraftfahrzeugs und einem zweiten Kraftfahrzeugteil des Kraftfahrzeugs;
- Fig. 4: eine weitere schematische Darstellung der Anordnung in unmontiertem Zustand;
- Fig. 5: eine schematische Darstellung der Anordnung in montiertem Zustand;
- Fig. 6: eine schematische Darstellung eines ersten Befestigungselements der Kopf-oben-Anzeigeeinheit und eines ersten Aufnahmeelements des ersten Kraftfahrzeugteils; und
- Fig. 7: eine schematische Darstellung eines zweiten Befestigungselements der Kopf-oben-Anzeigeeinheit zur Befestigung an dem zweiten Kraftfahrzeugteil.

In den Figuren werden gleiche oder funktionsgleiche Elemente mit den gleichen Bezugszeichen versehen.

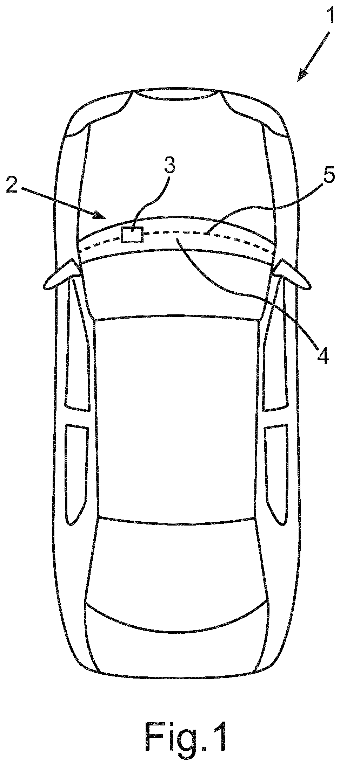

In Fig. 1 ist eine schematische Draufsicht auf ein Kraftfahrzeug 1 mit einer Anordnung 2 gezeigt. Die Anordnung 2 umfasst eine Kopf-oben-Anzeigeeinheit 3, ein erstes Kraftfahrzeugteil 4 und ein zweites Kraftfahrzeugteil 5. Die Kopf-oben-Anzeigeeinheit 3 ist gemäß dem Ausführungsbeispiel in dem Sichtfeld eines nicht weiter dargestellten Fahrers des Kraftfahrzeugs 1 angebracht. Das Anbringen ist jedoch vielfältig möglich, vorzugsweise allerdings so, dass die Kopf-oben-Anzeigeeinheit 3 an dem ersten Kraftfahrzeugteil 4 und/oder dem zweiten Kraftfahrzeugteil 5 befestigt ist.

Das erste Kraftfahrzeugteil 4 ist insbesondere als Armaturenbrett beziehungsweise als Instrumententafel ausgebildet. Das zweite Kraftfahrzeugteil 5 ist insbesondere als Querträger des Kraftfahrzeugs 1 ausgebildet. Sowohl das erste Kraftfahrzeugteil 4 als auch das zweite Kraftfahrzeugteil 5 sind gemäß Fig. 1 lediglich schematisch dargestellt und müssen sich nicht vollständig von einer Seite des Kraftfahrzeugs 1 zu der anderen Seite des Kraftfahrzeugs 1 erstrecken.

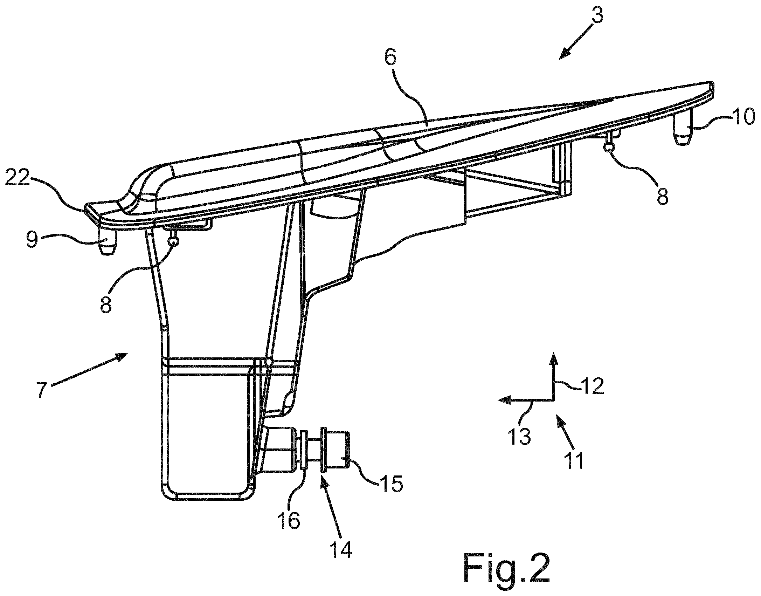

Fig. 2 zeigt die Kopf-oben-Anzeigeeinheit 3. Die Kopf-oben-Anzeigeeinheit 3 umfasst ein Gehäuse 6 und einen innerhalb des Gehäuses 6 angeordneten Bildgeber 7. An dem Gehäuse 6 der Kopf-oben-Anzeigeeinheit 3 ist gemäß dem Ausführungsbeispiel viermal ein Befestigungselement, welches im Ausführungsbeispiel als erstes Befestigungselement 8 bezeichnet wird, angeordnet. In der seitlichen Ansicht der Kopf-oben-Anzeigeeinheit 3 gemäß Fig. 2 sind lediglich zwei der ersten Befestigungselemente 8 sichtbar. Das jeweilige erste Befestigungselement 8 ist zapfenförmig ausgebildet und dient zur schwingungsentkoppelten Befestigung der Kopf-oben-Anzeigeeinheit 3 an dem ersten Kraftfahrzeugteil 4. Dazu ist das jeweilige erste Befestigungselement 8 starr, beispielsweise aus Kunststoff oder Stahl, ausgebildet. Ein Kopf des ersten Befestigungselements 8 ist rundlich und zum Eingriff in ein elastisches und anzeigeeinheitexternes Aufnahmeelement zur Ausbildung einer schwingungsentkoppelten Befestigung ausgebildet. Die Anordnung des jeweiligen ersten Befestigungselements 8 ist vielfältig an dem Gehäuse 6 der Kopf-oben-Anzeigeeinheit 3 möglich. Vorzugsweise sind die jeweiligen ersten Befestigungselemente 8 symmetrisch zueinander an dem Gehäuse 6 angeordnet. Es kann beispielsweise auch eine von der Anzahl vier abweichende Anzahl der ersten Befestigungselemente 8 an dem Gehäuse 6 angeordnet sein.

Weiterhin weist die Kopf-oben-Anzeigeeinheit 3 ein erstes Zentrierelement 9 und ein zweites Zentrierelement 10 auf.

Zur weiteren Beschreibung wird die Kopf-oben-Anzeigeeinheit 3 mit einem Koordinatensystem 11 beschrieben. Das Koordinatensystem 11 erstreckt sich in eine Hochrichtung der Kopf-oben-Anzeigeeinheit 3 mit einer z-Achse 12 und in eine Tiefenrichtung der Kopf-oben-Anzeigeeinheit 3 mit einer y-Achse 13. So erstrecken sich die jeweils ersten Befestigungselemente 8, das erste Zentrierelement 9 und das zweite Zentrierelement 10 in negative Richtung der z-Achse 12. Insbesondere erstrecken sich die Zentrierelemente 9, 10 weiter beziehungsweise tiefer in negative Richtung der z-Achse 12 als die jeweiligen ersten Befestigungselemente 8. Die Zentrierelemente 9, 10 sind also bezüglich der ersten Befestigungselemente 8 vorauseilend ausgebildet.

In negative Richtung der y-Achse 13 erstreckt sich ein weiteres Befestigungselement, welches im Ausführungsbeispiel als zweites Befestigungselement 14 bezeichnet wird. Das zweite Befestigungselement 14 ist zweiteilig ausgebildet und weist eine Schraube 15 und eine Mutter 16 auf. Durch die Mutter 16 lässt sich ein Spielausgleich bei der Befestigung der Kopf-oben-Anzeigeeinheit 3 an dem zweiten Kraftfahrzeugteil 5 bereitstellen. Die Mutter 16 weist ein Außengewinde auf, mit welchem das zweite Befestigungselement 14 in ein Gewinde des Gehäuses 6 eingeschraubt ist. Zudem weist die Mutter 16 ein Innengewinde auf, in welchem die Schraube 15 eingeschraubt ist.

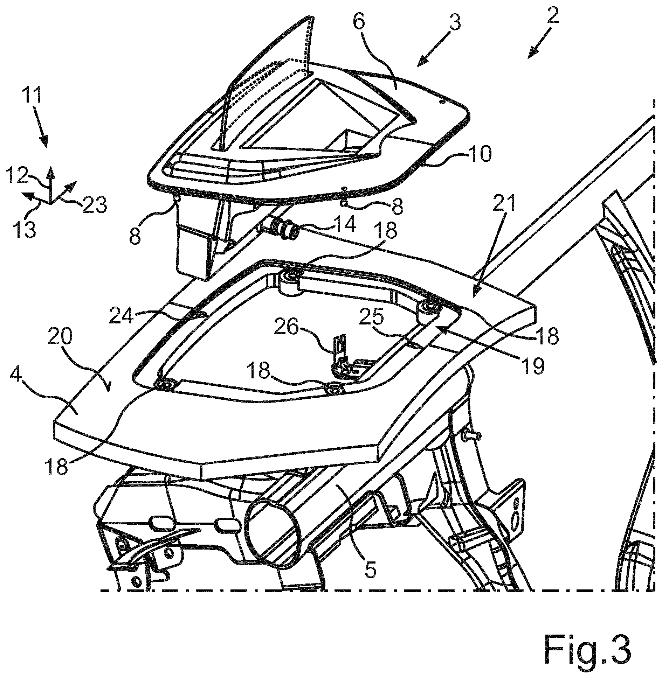

Fig. 3 zeigt die Anordnung 2. Gemäß der Darstellung von Fig. 3 wird ein Montagevorgang der Anordnung 2 gezeigt. Es wird die Kopf-oben-Anzeigeeinheit 3 in eine Öffnung 17 des ersten Kraftfahrzeugteils 4 eingesetzt.

Das erste Kraftfahrzeugteil 4 weist vier Aufnahmeelemente, welche im Ausführungsbeispiel als erste Aufnahmeelemente 18 bezeichnet werden, auf. Die ersten Aufnahmeelemente 18 sind an einer vertieften Auflagefläche 19 des ersten Kraftfahrzeugteils 4 angeordnet. Die vertiefte Auflagefläche 19 ist an einer Oberseite 20 des ersten Kraftfahrzeugteils 4 angeordnet. Bezüglich einer Hauptfläche 21 der Oberseite 20 des ersten Kraftfahrzeugteils 4 ist die vertiefte Auflagefläche 19 tiefer angeordnet. Die vertiefte Auflagefläche 19 ist insbesondere derart tief angeordnet, dass eine Höhe eines Gehäuserands 22 des Gehäuses 6 durch die vertiefte Auflagefläche derart tief in negative Richtung der z-Achse 12 angeordnet ist, dass die Hauptfläche 21 und eine Oberfläche des Gehäuses 6 im Wesentlichen auf einem Level liegen. Die vertiefte Auflagefläche 19 weist also in einer Ebene der y-Achse 13 und einer x-Achse 23 des Koordinatensystems 11 die Abmessungen des Gehäuses 6 der Kopf-oben-Anzeigeeinheit 3 auf.

Die ersten Aufnahmeelemente 18 sind insbesondere aus einem Elastomer ausgebildet und deswegen zumindest teilweise elastisch ausgebildet. Durch die ersten Aufnahmeelemente 18 werden die korrespondierenden ersten Befestigungselemente 8 aufgenommen. Durch das Zusammenspiel der ersten Befestigungselemente 8 und der ersten Aufnahmeelemente 18 kann die Kopf-oben-Anzeigeeinheit 3 schwingungsentkoppelt an dem ersten Kraftfahrzeugteil 4 befestigt werden.

Weiterhin weist das erste Kraftfahrzeugteil 4 eine erste Zentrieröffnung 24 und eine zweite Zentrieröffnung 25 auf. Die erste Zentrieröffnung 24 ist dabei als Rundloch ausgebildet, während die zweite Zentrieröffnung 25 als Langloch ausgebildet ist, welches sich in Richtung der y-Achse 13 erstreckt.

Bei der Montage wird die Kopf-oben-Anzeigeeinheit 3 in Richtung der negativen z-Achse 12 in die Öffnung 17 eingesteckt, bis das erste Zentrierelement 9 in die erste Zentrieröffnung 24 hineingesteckt wird. Die Kopf-oben-Anzeigeeinheit 3 ist nun bis auf die Rotation um die z-Achse 12 bezüglich des ersten Kraftfahrzeugteils 4 festgelegt. In einem nächsten Schritt wird die Kopf-oben-Anzeigeeinheit 3 so lange stufenweise rotiert, bis das zweite Zentrierelement 10 im Eingriff mit der zweiten Zentrieröffnung 25 steht. Das Langloch der zweiten Zentrieröffnung 25 ermöglicht den Ausgleich von Fertigungstoleranzen bei dem Abstand von der ersten Zentrieröffnung 24 und der zweiten Zentrieröffnung 25, also des ersten Kraftfahrzeugteils 4 und/oder bei dem Abstand des ersten Zentrierelements 9 von dem zweiten Zentrierelement 10, also der Kopf-oben-Anzeigeeinheit 3. Sind die Zentrierelemente 9, 10 in die Zentrieröffnungen 24, 25 eingerastet, so befinden sich auch die jeweils ersten Befestigungselemente 8 in der richtigen Position, um in die ersten Aufnahmeelemente 18 eingedrückt zu werden. Für das Eindrücken der ersten Befestigungselemente 8 in die ersten Aufnahmeelemente 18 wird die Kopf-oben-Anzeigeeinheit 3 weiter in negative Richtung der z-Achse 12 gedrückt. Nach Überwindung eines Anfangswiderstands ist die Kopf-oben-Anzeigeeinheit 3 durch die ersten Befestigungselemente 8 und die ersten Aufnahmeelemente 18 schwingungsentkoppelt an dem ersten Kraftfahrzeugteil 4 befestigt.

Weiterhin greift das zweite Befestigungselement 14 bei der Montage in ein weiteres Aufnahmeelement, welches im Ausführungsbeispiel als zweites Aufnahmeelement 26 bezeichnet wird, des zweiten Kraftfahrzeugteils 5. Das zweite Aufnahmeelement 26 ist dabei mit einem randseitig offenen Langloch ausgebildet. Weiterhin ist das zweite Aufnahmeelement 26 L-förmig ausgebildet. So erstreckt sich das Langloch in Richtung der z-Achse 12. Die offene Randseite des Langlochs befindet sich in Richtung der positiven z-Achse 12.

So kann die Kopf-oben-Anzeigeeinheit 3 während der Montage in eine Raumrichtung, welche durch die z-Achse 12 beschrieben wird, anhand des Langlochs beziehungsweise der zweiten Zentrieröffnung 25 bewegt werden, und in eine andere Raumrichtung, welche durch die y-Achse 13 beschrieben wird, anhand der Mutter 16 des zweiten Befestigungselements 14. Durch die Schraube 15 und die Mutter 16 kann das zweite Aufnahmeelement 26 an dem zweiten Kraftfahrzeugteil 5 während der Montage also entlang der y-Achse 13 bewegt werden. Die Bewegung der Kopf-oben-Anzeigeeinheit 3 in Richtung der y-Achse 13 kann insbesondere durch ein Verdrehen des äußeren Gewindes der Mutter 16 bereitgestellt werden.

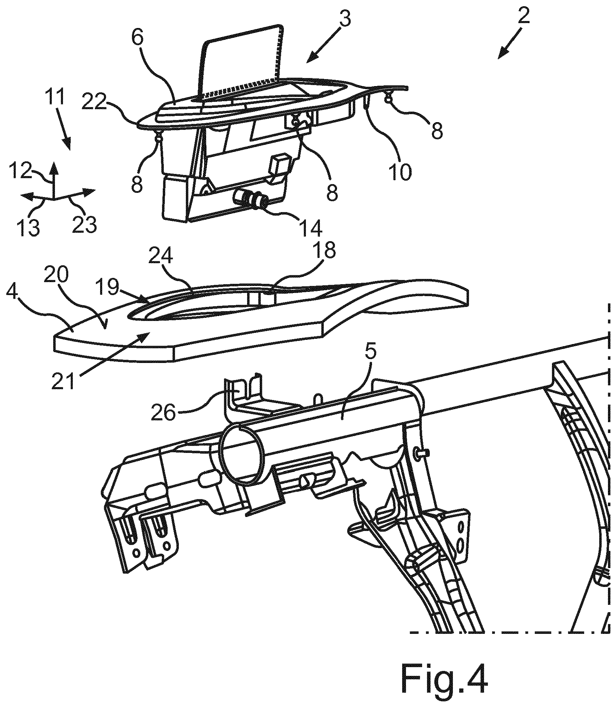

Fig. 4 zeigt ebenfalls die Anordnung 2. Gemäß Fig. 4 ist die Anordnung 2 in einer seitlicheren Ansicht als in Fig. 3 gezeigt. Es wird die Kopf-oben-Anzeigeeinheit 3 vor der Montage mit dem ersten Kraftfahrzeugteil 4 und dem zweiten Kraftfahrzeugteil 5 gezeigt. Deutlich zu sehen in dieser Ansicht ist die L-förmige Ausgestaltung des zweiten Aufnahmeelements 26 und das randseitig offene Langloch des zweiten Aufnahmeelements 26.

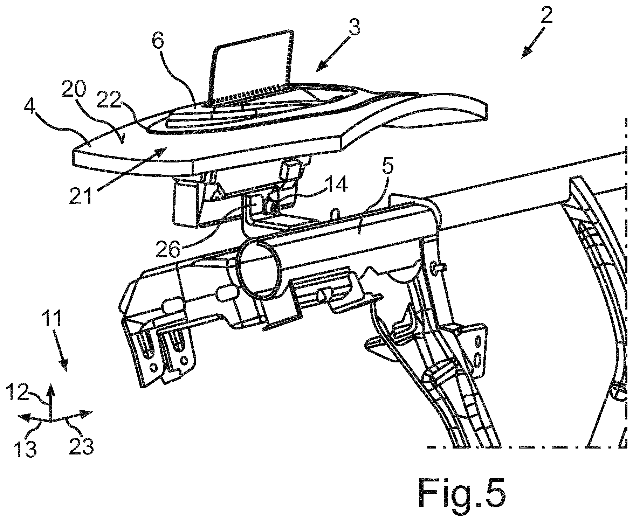

Fig. 5 zeigt die montierte Anordnung 2. Bei der montierten Anordnung 2 sind die ersten Befestigungselemente 8 im Eingriff mit den ersten Aufnahmeelementen 18. Dadurch ist die Kopf-oben-Anzeigeeinheit 3 bezüglich des ersten Kraftfahrzeugteils 4 schwingungsentkoppelt befestigt. Vorzugsweise besteht dann zu der ersten Zentrieröffnung 24 und/oder der zweiten Zentrieröffnung 25 kein Kontakt mehr von dem ersten Zentrierelement 9 und/oder dem zweiten Zentrierelement 10. Ergänzend oder alternativ kann die erste Zentrieröffnung 24 und/oder die zweite Zentrieröffnung 25 mit einem teilweise elastischen Material ausgekleidet sein, um mögliche Schwingungen von dem ersten Kraftfahrzeugteil 4 abzudämpfen. In dem montierten Zustand der Anordnung 2 gemäß Fig. 5 wird das wesentliche Gewicht der Kopf-oben-Anzeigeeinheit 3 insbesondere durch die Befestigung der Kopf-oben-Anzeigeeinheit 3 mit dem zweiten Befestigungselement 14 von dem zweiten Kraftfahrzeugteil 5 aufgenommen. Bei der Befestigung des zweiten Befestigungselements 14 an dem zweiten Aufnahmeelement 26 kann eine spielausgleichende Justierung vorgenommen werden. Die Justierung kann beispielsweise bei der Montage der Kopf-oben-Anzeigeeinheit 3 durchgeführt werden, es ist aber auch eine spätere Justierung der Kopf-oben-Anzeigeeinheit 3 in Richtung der z-Achse 12 und/oder der y-Achse 13 möglich. Durch die spielausgleichende Befestigung können beispielsweise Spalte zwischen dem ersten Kraftfahrzeugteil 4 und der Kopf-oben-Anzeigeeinheit 3 ausgeglichen werden.

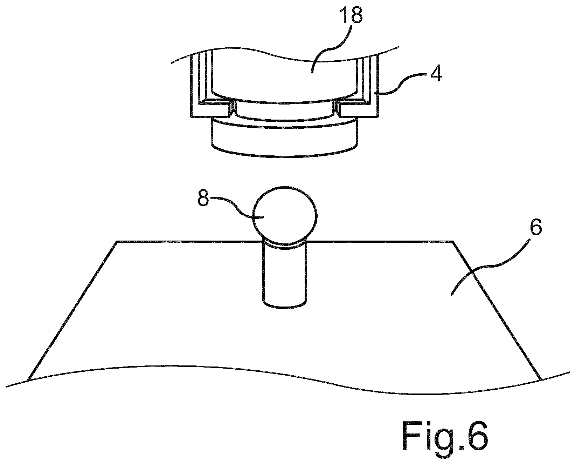

Fig. 6 zeigt das erste Befestigungselement 8 und das erste Aufnahmeelement 18. Bei der Montage wird das erste Befestigungselement 8 dann in das elastische erste Aufnahmeelement 18 eingedrückt. Dadurch wird eine schwingungsentkoppelte und geräuschentkoppelte Verbindung zwischen der Kopf-oben-Anzeigeeinheit 3 und dem ersten Kraftfahrzeugteil 4 bereitgestellt.

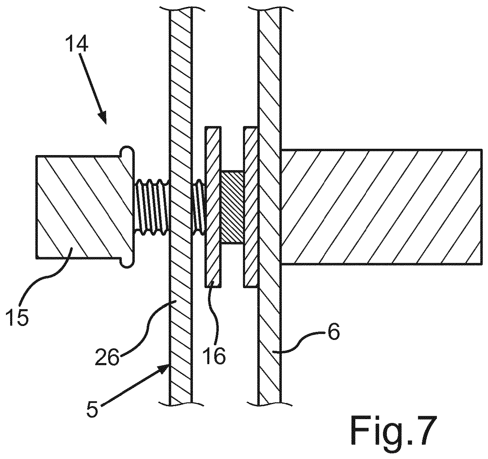

Fig. 7 zeigt das zweite Befestigungselement 14, mit welchem die spielausgleichbare Befestigung der Kopf-oben-Anzeigeeinheit 3 an dem zweiten Kraftfahrzeugteil 5 bereitgestellt wird. Das zweite Befestigungselement 14 weist die Schraube 15 und die Mutter 16 auf.

## Patentansprüche

1. Anordnung (2) mit zumindest einem ersten Kraftfahrzeugteil (4) eines Kraftfahrzeugs (1) und einer Kopf-oben-Anzeigeeinheit (3) mit zumindest einem Befestigungselement (8, 14) zum Befestigen der Kopf-oben-Anzeigeeinheit (3) an zumindest einem Kraftfahrzeugteil (4, 5) eines Kraftfahrzeugs (1), wobei die Kopf-oben-Anzeigeeinheit (3) ein Gehäuse (6) und einen Bildgeber (7) umfasst, und das zumindest eine Befestigungselement (8, 14) mit dem Gehäuse (6) verbunden ist, wobei das zumindest eine Befestigungselement (8) zapfenförmig und zur schwingungsentkoppelten Befestigung der Kopf-oben-Anzeigeeinheit (3) an einem ersten Kraftfahrzeugteil (4) ausgebildet ist, wobei das Befestigungselement (8) starr, insbesondere aus Kunststoff oder Stahl, und zum Eingriff in ein elastisches und anzeigeeinheitexternes Aufnahmeelement (18) zur Ausbildung der schwingungsentkoppelten Befestigung ausgebildet ist,
**dadurch gekennzeichnet, dass**
ein Kopf des Befestigungselements (8) rundlich ausgebildet ist,
wobei das erste Kraftfahrzeugteil (4) mit zumindest einem Aufnahmeelement (18) zur Aufnahme eines Befestigungselements (8) der Kopf-oben-Anzeigeeinheit (3) ausgebildet ist und das zumindest eine Aufnahmeelement (18) zumindest teilweise elastisch ist, insbesondere aus einem Elastomer ausgebildet ist.

2. Anordnung (2) nach einem der vorhergehenden Ansprüche,
**dadurch gekennzeichnet, dass**
das Befestigungselement (8) zur Befestigung an dem als Armaturenbrett ausgebildeten ersten Kraftfahrzeugteil (4) ausgebildet ist.

3. Anordnung (2) nach einem der vorhergehenden Ansprüche,
**dadurch gekennzeichnet, dass**
an dem Gehäuse (6) zumindest ein Zentrierelement (9, 10) zur Ausrichtung des Gehäuses (6) an dem ersten Kraftfahrzeugteil (4) angeordnet ist.

4. Anordnung (2) nach Anspruch 3,
**dadurch gekennzeichnet, dass**
das zumindest eine Zentrierelement (9, 10) eine Montagehilfe ist und vorauseilend gegenüber dem Befestigungselement (8) ausgebildet ist.

5. Anordnung (2) nach einem der vorhergehenden Ansprüche,
**dadurch gekennzeichnet, dass**
die Kopf-oben-Anzeigeeinheit (3) mit einem weiteren Befestigungselement (14) zur Befestigung an einem zweiten Kraftfahrzeugteil (5) des Kraftfahrzeugs (1) ausgebildet ist, wobei das weitere Befestigungselement (14) zur Lageeinstellung der Kopf-oben-Anzeigeeinheit (3) in zwei Raumrichtungen (12, 13) zum zweiten Kraftfahrzeugteil (5) ausgebildet ist.

6. Anordnung (2) nach Anspruch 1,
**dadurch gekennzeichnet, dass**
das erste Kraftfahrzeugteil (4) als ein Armaturenbrett des Kraftfahrzeugs (1) ausgebildet ist.

7. Anordnung (2) nach Anspruch 1,
**dadurch gekennzeichnet, dass**
das zumindest eine Aufnahmeelement (18) in einer an einer Oberseite (20) des ersten Kraftfahrzeugteils (4) ausgebildeten und bezüglich einer Hauptfläche (21) des ersten Kraftfahrzeugteils (4) vertieften Auflagefläche (19) angeordnet ist, wobei die vertiefte Auflagefläche (19) eine Öffnung (17) im ersten Kraftfahrzeugteil (4) zum Hindurchstecken der Kopf-oben-Anzeigeeinheit (3) umgibt.

8. Anordnung (2) nach einem der Ansprüche 1 bis 7,
**dadurch gekennzeichnet, dass**
das erste Kraftfahrzeugteil (4) mit zumindest einer mit einem Zentrierelement (9, 10) der Kopf-oben-Anzeigeeinheit (3) korrespondierenden Zentrieröffnung (24, 25) zur Ausrichtung der Kopf-oben-Anzeigeeinheit (3) bezüglich des ersten Kraftfahrzeugteils (4) beim Koppeln des Zentrierelements (9, 10) mit der Zentrieröffnung (24, 25) ausgebildet ist.

9. Anordnung (2) nach einem der Ansprüche 1 bis 8,
**dadurch gekennzeichnet, dass**
die Kopf-oben-Anzeigeeinheit (3) mittels eines weiteren Befestigungselements (14) der Kopf-oben-Anzeigeeinheit (3) an einem, insbesondere als Querträger ausgebildeten, zweiten Kraftfahrzeugteil (5) des Kraftfahrzeugs (1) befestigt ist.

10. Anordnung (2) nach Anspruch 9,
**dadurch gekennzeichnet, dass**
das zweite Kraftfahrzeugteil (5) mit einem, insbesondere L-förmigen, weiteren Aufnahmeelement (26) zur Aufnahme des weiteren Befestigungselements (14) ausgebildet ist, und das weitere Aufnahmeelement (26) ein, insbesondere randseitig offenes, Langloch zur vertikalen Lageeinstellung der Kopf-oben-Anzeigeeinheit (3) bezüglich des zweiten Kraftfahrzeugteils (5) aufweist.

11. Kraftfahrzeug (1) mit einer Anordnung (2) nach einem der Ansprüche 1 bis 10.

## Claims

1. Arrangement (2) having at least one first motor vehicle part (4) of a motor vehicle (1) and a head-up display unit (3) having at least one fastening element (8, 14) for fastening the head-up display unit (3) to at least one motor vehicle part (4, 5) of a motor vehicle (1), wherein the head-up display unit (3) comprises a housing (6) and an imager (7), and the at least one fastening element (8, 14) is connected to the housing (6), wherein the at least one fastening element (8) is designed in a pin-shaped manner and for the vibration-decoupled fastening of the head-up display unit (3) to a first motor vehicle part (4), wherein the fastening element (8) is rigid, in particular made of plastics material or steel, and is designed for engagement in an elastic receptacle element (18), external to the display unit, for forming the vibration-decoupled fastening, **characterized in that**
a head of the fastening element (8) is of a rounded design,
wherein the first motor vehicle part (4) is formed with at least one receptacle element (18) for receiving a fastening element (8) of the head-up display unit (3), and the at least one receptacle element (18) is at least partially elastic, in particular formed from an elastomer.

2. Arrangement (2) according to one of the preceding claims,
**characterized in that**
the fastening element (8) is designed to be fastened to the first motor vehicle part (4) which is designed as a dashboard.

3. Arrangement (2) according to one of the preceding claims,
**characterized in that**
at least one centring element (9, 10) for the alignment of the housing (6) on the first motor vehicle part (4) is disposed on the housing (6).

4. Arrangement (2) according to Claim 3,
**characterized in that**
the at least one centring element (9, 10) is an assembly aid and is formed ahead of the fastening element (8).

5. Arrangement (2) according to one of the preceding claims,
**characterized in that**
the head-up display unit (3) is formed with a further fastening element (14) for fastening to a second motor vehicle part (5) of the motor vehicle (1), wherein the further fastening element (14) is designed for adjusting the position of the head-up display unit (3) in two spatial directions (12, 13) relative to the second motor vehicle part (5).

6. Arrangement (2) according to Claim 1,
**characterized in that**
the first motor vehicle part (4) is designed as a dashboard of the motor vehicle (1).

7. Arrangement (2) according to Claim 1,
**characterized in that**
the at least one receptacle element (18) is disposed in a support surface (19) formed on an upper side (20) of the first motor vehicle part (4) and recessed in relation to a main surface (21) of the first motor vehicle part (4), wherein the recessed support surface (19) surrounds an opening (17) in the first motor vehicle part (4) for pushing through the head-up display unit (3).

8. Arrangement (2) according to one of Claims 1 to 7, **characterized in that**
the first motor vehicle part (4) is formed with at least one centring opening (24, 25) corresponding to a centring element (9, 10) of the head-up display unit (3) for aligning the head-up display unit (3) relative to the first motor vehicle part (4) when coupling the centring element (9, 10) to the centring opening (24, 25).

9. Arrangement (2) according to one of Claims 1 to 8, **characterized in that**
the head-up display unit (3) by means of a further fastening element (14) of the head-up display unit (3) is fastened to a second motor vehicle part (5), which is in particular designed as a cross member, of the motor vehicle (1).

10. Arrangement (2) according to Claim 9,
**characterized in that**
the second motor vehicle part (5) is formed with an, in particular L-shaped, further receptacle element (26) for receiving the further fastening element (14), and the further receptacle element (26) has a slot, in particular open on the periphery, for the vertical positioning of the head-up display unit (3) relative to the second motor vehicle part (5).

11. Motor vehicle (1) having an arrangement (2) according to one of Claims 1 to 10.

## Revendications

1. Ensemble (2) avec au moins une première partie (4) de véhicule à moteur d'un véhicule à moteur (1) et une unité d'affichage tête haute (3) avec au moins un élément de fixation (8, 14) destiné à fixer l'unité d'affichage tête haute (3) sur au moins une partie (4, 5) de véhicule à moteur d'un véhicule à moteur (1), l'unité d'affichage tête haute (3) comprenant un boîtier (6) et un capteur d'images (7) et l'au moins un élément de fixation (8, 14) étant relié au boîtier (6), l'au moins un élément de fixation (8) étant réalisé en forme de tourillon et pour la fixation par découplage de vibrations de l'unité d'affichage tête haute (3) sur une première partie (4) de véhicule à moteur, l'élément de fixation (8) étant réalisé de manière rigide, en particulier à partir de matière plastique ou d'acier, et pour venir en prise avec un élément de réception (18) élastique et externe à l'unité d'affichage pour réaliser la fixation par découplage de vibrations,
**caractérisé en ce que**
une tête de l'élément de fixation (8) est réalisée de manière arrondie,
la première partie (4) de véhicule à moteur étant réalisée avec au moins un élément de réception (18) destiné à recevoir un élément de fixation (8) de l'unité d'affichage tête haute (3) et l'au moins un élément de réception (18) étant au moins en partie élastique, en particulier étant réalisé en un élastomère.

2. Ensemble (2) selon la revendication précédente, **caractérisé en ce que**
l'élément de fixation (8) est réalisé pour être fixé sur la première partie (4) de véhicule à moteur réalisée comme un tableau de bord.

3. Ensemble (2) selon la revendication précédente, **caractérisé en ce que**
au moins un élément de centrage (9, 10) destiné à aligner le boîtier (6) sur la première partie (4) de véhicule à moteur est disposé sur le boîtier (6).

4. Ensemble (2) selon la revendication 3,
**caractérisé en ce que**
l'au moins un élément de centrage (9, 10) est une aide au montage et est réalisé en amont par rapport à l'élément de fixation (8).

5. Ensemble (2) selon la revendication précédente, **caractérisé en ce que**
l'unité d'affichage tête haute (3) est réalisée avec un autre élément de fixation (14) destiné à être fixé sur une deuxième partie (5) de véhicule à moteur du véhicule à moteur (1), l'autre élément de fixation (14) étant réalisé pour régler la position de l'unité d'affichage tête haute (3) dans deux directions spatiales (12, 13) par rapport à la deuxième partie (5) de véhicule à moteur.

6. Ensemble (2) selon la revendication 1,
**caractérisé en ce que**
la première partie (4) de véhicule à moteur est réalisée comme un tableau de bord du véhicule à moteur (1).

7. Ensemble (2) selon la revendication 1,
**caractérisé en ce que**
l'au moins un élément de réception (18) est disposé dans une surface de support (19) réalisée sur un côté supérieur (20) de la première partie (4) de véhicule à moteur et ménagée en creux par rapport à une surface principale (21) de la première partie (4) de véhicule à moteur, la surface de support (19) en creux entourant une ouverture (17) dans la première partie (4) de véhicule à moteur destinée à insérer l'unité d'affichage tête haute (3).

8. Ensemble (2) selon l'une des revendications 1 à 7, **caractérisé en ce que**
la première partie (4) de véhicule à moteur est réalisée avec au moins une ouverture de centrage (24, 25) correspondant à un élément de centrage (9, 10) de l'unité d'affichage tête haute (3), destinée à aligner l'unité d'affichage tête haute (3) par rapport à la première partie (4) de véhicule à moteur lors du couplage de l'élément de centrage (9, 10) avec l'ouverture de centrage (24, 25).

9. Ensemble (2) selon l'une des revendications 1 à 8, **caractérisé en ce que**
l'unité d'affichage tête haute (3) est fixée sur une deuxième partie (5) de véhicule à moteur du véhicule à moteur (1) réalisée en particulier comme une traverse, au moyen d'un autre élément de fixation (14) de l'unité d'affichage tête haute (3).

10. Ensemble (2) selon la revendication 9,
**caractérisé en ce que**
la deuxième partie (5) de véhicule à moteur est réalisée avec un autre élément de réception (26) en particulier en forme de L destiné à recevoir l'autre élément de fixation (14), et l'autre élément de réception (26) comporte un trou oblong, en particulier ouvert côté bord, destiné à régler verticalement la position de l'unité d'affichage tête haute (3) par rapport à la deuxième partie (5) de véhicule à moteur.

11. Véhicule à moteur (1) avec un ensemble (2) selon l'une des revendications 1 à 10.
